# EUROPEAN PATENT APPLICATION

(11) **EP 2 081 398 A1**
(43) Date of publication of application: **22.07.2009**
(21) Application number: 07846111.8
(22) Date of filing: 20.12.2007
(51) Int. Cl.: H04Q 11/00, H04Q 3/00

(54) **COMMUNICATION APPARATUS, METHOD AND EXCHANGE PLATE FOR UNIFORM EXCHANGES FOR VARIOUS SERVICES**

(30) Priority: 31.12.2006 CN 200610063763
(71) Applicant: Huawei Technologies Co., Ltd., Shenzhen, Guangdong Province 518129 (CN)
(72) Inventor: WAN, Huaixue, Shenzhen Guangdong 518129 (CN); LI, Xiaodong, Shenzhen Guangdong 518129 (CN)
(74) Representative: Körber, Martin Hans
(86) International application number: PCT/CN2007/071285
(87) International publication number: WO 2008/080339

(57) **Abstract**

A communication apparatus, a method and a switch board for universal switching of multiple services. The communication apparatus includes a backplane board, a switch board, and a plurality of service boards. The switch board and the service boards are inserted into a switch board slot and a plurality of service board slots on the backplane board respectively. Only one set of service buses is provided on the backplane board. The switch board includes a plurality of switching modules associated with the services and adapted to schedule and switch the services. The communication apparatus further includes a selector adapted to connect the service buses to respective switching modules associated with the services according to types of the services. The method includes: connecting, by a selector, service buses with respective switching modules associated with the services according to types of the services; scheduling and switching the services by the switching modules. With the present invention, universal switching of multiple services may be achieved with low cost.

## Description

### FIELD OF THE INVENTION

The present invention relates to communication technology, and more particularly, to a communication apparatus, method and switch board for universal switching of multiple services.

### BACKGROUND

Generally, a communication apparatus consists of different racks, subracks or cabinet and each subrack or cabinet contains a host machine or a master control board, and slave boards such as switch boards, various service boards and so on. Service boards and switch boards are typically connected to a backplane board. Service lines are provided on the backplane board. Both the switch boards and the service boards are removable units, and different service interfaces may be provided by replacing different service boards. There are two typical kinds of service boards. One is the packet service board for processing packet services, such as Ethernet services, in unit of packets. The other is Time Division Multiplexing (TDM) service board for processing TDM services, such as TDM services of Synchronous Digital Hierarchy (SDH) interfaces, in unit of time slots within SDH frame structure, such as VC12/VC4. The switch board performs scheduling and switching among service boards, including time slot switching for TDM services and packet switching for packet services.

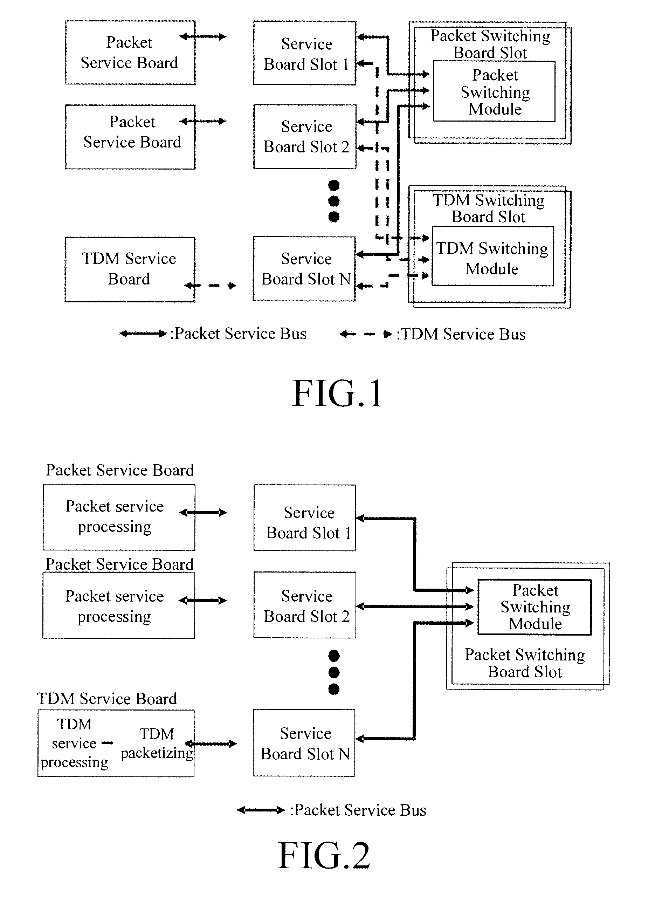

Fig. 1 shows a communication apparatus in the prior art. In the communication apparatus, only one kind of service board slots are provided, the same kind of board slot may be used for both packet service boards and TDM service boards. Two kinds of switch board slots are provided, one is the packet switch board slot for packet switching and the other is the TDM switch board slot for TDM switching. There are two sets of service buses on the backplane board of the service board slots, which are packet service buses connected to the packet switch board slot and TDM service buses connected to the TDM switch board slot, and which are physically separated. The service buses of packet service boards and the service buses of TDM service boards are also different in terms of physical locations and corresponding to packet service buses and TDM service buses on the backplane board respectively. In this way, for a same service board slot, when it is used for a packet service board, a service bus will be connected to the packet switching module; and when it is used for a TDM service board, a service bus will be connected to the TDM switching module, thereby processing both TDM and packet services in the same apparatus. However, in the process of researches and applications, the inventor of the present invention finds that the technology in the prior art requires two sets of buses on the backplane board of each service board slot and the two sets of buses cannot be used at the same time, so that resources are wasted. In addition, two kinds of slots are required for each switch board, and the redundant slots occupy space of the apparatus.

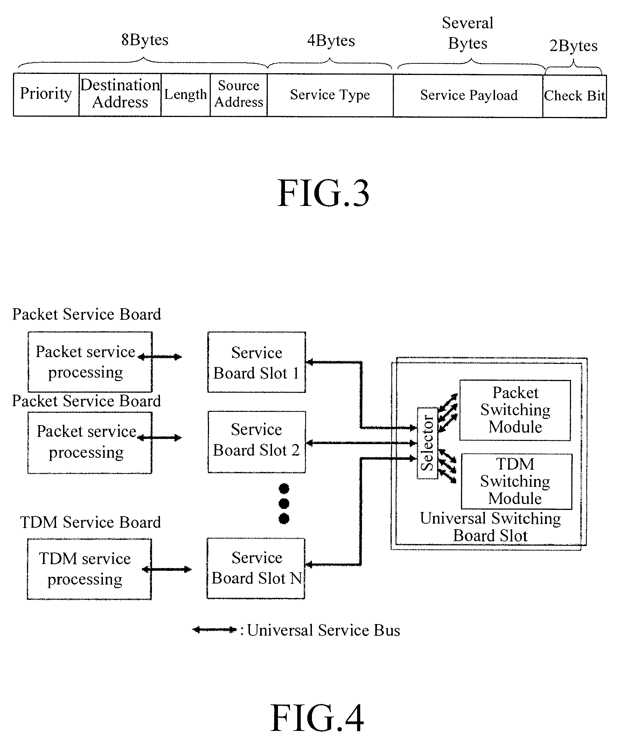

Fig. 2 shows another communication apparatus in the prior art. In the communication apparatus, only a packet switching module is employed and only packet service buses are provided on the backplane board. For packet service boards, the processed services are directly sent to the packet switching module. For TDM services, packetizing is required to convert the TDM frame structure into elements that the packet switching module can identify and switch. The process for converting the TDM frame structure into packets includes: dividing the TDM frame structure into several segments, then encapsulating each segment as payload into the frame structure as shown in Fig.3. The switch board may identify this kind of frame structure and forward it to the destination board slot. The destination service board then recovers it into the original frame structure and thus a universal switching for TDM services and packet services is achieved. However, in the process of researches and applications, the inventor of the present invention finds that in the technology of the prior art, a TDM packetizing module needs be added to each TDM service board, hence causing high cost of the apparatus.

### SUMMARY

Embodiments of the present invention provide a communication apparatus, a method and a switch board for universal switching of multiple services, in order to solve, with low cost, the problem of universal switching of multiple services.

An embodiment of the present invention provides a communication apparatus for universal switching of multiple services, the communication apparatus includes a backplane board, a switch board, and a plurality of service boards, the switch board and the service boards are inserted into a switch board slot and a plurality of service board slots on the backplane board respectively, only one set of service buses is provided on the backplane board; the switch board includes a plurality of switching modules associated with the services and adapted to schedule and switch the services; the communication apparatus further includes a selector adapted to connect the service buses to switching modules associated with the services according to types of the services.

An embodiment of the present invention also provides a method for universal switching of multiple services. The method includes: connecting, by a selector, service buses with respective switching modules associated with the services according to types of the services; scheduling and switching, by the switching modules, the services.

An embodiment of the present invention also provides a switch board inserted in a switch board slot of a backplane board. The switch board includes a plurality of switching modules and a selector, the selector is adapted to connect service buses on the backplane board with switching modules associated with services according to types of the services processed by service boards inserted in the backplane board, and the switching modules are adapted to schedule and switch the services.

In embodiments of the present invention, the same set of buses is employed on the backplane board as both TDM service and packet service buses, and thereby the wiring cost of the backplane board is reduced. The TDM switching and packet switching are integrated on a single switch board, and thereby less kinds of single boards are needed in the apparatus. Single board hardware of traditional TDM apparatus may be employed as the TDM service board without any hardware modification, and may be used in the apparatus for universal switching of TDM and packet services, and this is advantageous in terms of cost, compatibility and inheritance.

### BRIEF DESCRIPTION OF THE DRAWINGS

Fig. 1 is a block diagram illustrating a communication apparatus in the prior art;

Fig. 2 is a block diagram illustrating another communication apparatus in the prior art;

Fig. 3 is a schematic diagram illustrating the frame structure formed through TDM packetizing according to a technology in the prior art as shown in Fig. 2; and

Fig. 4 is a block diagram illustrating a communication apparatus according to an embodiment of the present invention.

### DETAILED DESCRIPTION

Fig. 4 shows a communication apparatus for universal switching of multiple services according to an embodiment of the present invention. Only one kind of service board slots are provided in the communication apparatus. The same kind of board slots may be used for both packet service boards and TDM service boards. And only one kind of switch board slot is provided in the communication apparatus, and may be referred to as universal switching board slot. On the switch board slot according to the embodiment of the present invention, there are two switching modules, i.e., a TDM switching module and a packet switching module for TDM switching and packet switching respectively, and a selector connected with service buses.

There is only one set of service buses on the backplane board of the service board slots. When a service board slot is used for a packet service board, the set of service buses acts as packet service buses, and when the service board slot is used for a TDM service board, the set of service buses acts as TDM service buses.

The TDM service board includes, but is not limited to, a SDH service interface and a PDH service interface. After these services are processed on the service board, they are sent to the backplane board where TDM bus mode is still adopted.

The packet service board includes, but is not limited to, an Ethernet service interface. After these services are processed on the service board, they are sent to the backplane board where packet bus mode is still adopted.

A packet switching module, a TDM switching module and a selector are located on the universal switching board. The selector allocates the service buses to the two switching modules according to the types of services processed by the service boards at the service board slots. In particular, if a TDM service board is used at a service board slot, the selector switches the corresponding service buses to the TDM switching module, and if a packet service board is used at a service board slot, the selector switches the corresponding service bus to the packet switching module.

The selector may include multiple one-out-of-two switches and the number of the switches may be determined according to service capacity. Of course, other switches such as one-out-of-three switches, one-out-of-four switches, etc., may be applied and fall within the protection scope of the present invention.

The selector is a semi-permanent connection controlled by software of the universal switching board. The software may control the selector according to the types of services processed by the service boards at the service board slots. The software may identify the types of services processed by the service boards at the service board slots according to an internal communication mechanism such as different message contents sent from the service boards. For example, a message content of "0" represents the packet service, and "1" represents the TDM service.

In an embodiment of the present invention, the acts of the selector are controlled by the software. Moreover, the selector may also be controlled by a hardware such as Field Programmable Gate Array (FPGA), and this falls within the protection scope of the present invention.

An embodiment of the present invention provide a method for universal switching of multiple services, the method includes the following steps.

Step 1: A packet service is inputted to a packet service board and a TDM service is inputted to a TDM service board.

Step 2: The packet service board processes the packet service and the TDM service board processes the TDM service.

Step 3: The packet service board and the TDM service board send different messages to the universal switching board to notify the types of services processed by them.

Step 4: The universal switching board controls the selector to switch the different services processed by the respective service boards to corresponding switching modules on the universal switching board. In particular, the packet service processed by the packet service board is switched to the packet switching module and the TDM service processed by the TDM service board is switched to the TDM switching module.

Step 5: The packet switching module switches the packet service and the TDM switching module switches the TDM service.

Beneficial effects of embodiments of the present invention are as follows. The same set of buses is employed on the backplane board as both TDM service and packet service buses, and thereby the wiring cost of the backplane board is reduced. The TDM switching and packet switching are integrated on a single switch board, and thereby less kinds of single boards are needed in the apparatus. Single board hardware of traditional TDM apparatus may be employed as the TDM service board without any hardware modification, and may be used in the apparatus for universal switching of TDM and packet services, and this is advantageous in terms of cost, compatibility and inheritance.

Although embodiments of the present invention are described by taking the packet service and TDM service as example, the universal switching of other services may be implemented in embodiments of the present invention and also falls in the protection scope of the present invention.

Terms such as single board, backplane board as used in the embodiments of the present invention are not intended to limit the present invention and other terms used in the field with same or similar functions such as service card and backplane board are also within the protection scope of the present invention.

The above description only illustrates preferred embodiments of the present invention, and the scope of the present invention is not limited thereto. Any variations or replacements easily occur to those skilled in the art without the technical scope disclosed by the present invention should be covered by the scope of the present invention. Therefore, the protection scope of the present invention should be based on the claims.

## Claims

1. A communication apparatus for universal switching of multiple services, comprising a backplane board, a switch board, and a plurality of service boards, wherein the switch board and the service boards are inserted into a switch board slot and a plurality of service board slots on the backplane board respectively, the communication apparatus is **characterized by** further comprising a selector, and wherein:
only one set of service buses is provided on the backplane board;
the switch board comprises a plurality of switching modules associated with the services and adapted to schedule and switch the services;
the selector is adapted to connect the service buses with respective switching modules associated with the services according to types of the services.

2. The communication apparatus of claim 1, wherein the selector comprises one-out-of-two switches.

3. The communication apparatus of claim 1, wherein the service boards are adapted to send messages to the switch board to notify the switch board of the types of the services.

4. The communication apparatus of claim 1, wherein the switch board is adapted to control the selector to connect the service buses to the switching modules associated with the services according to the types of the services.

5. The communication apparatus of claim 1, wherein the service boards comprise time division multiplexing (TDM) service boards and packet service boards, and the switching modules comprise a TDM switching module and a packet switching module associated with the TDM service boards and the packet service boards respectively.

6. A method for universal switching of multiple services, comprising:
connecting, by a selector, service buses with switching modules associated with the services according to types of the services; and
scheduling and switching, by the switching modules, the services.

7. The method of claim 6, wherein the connecting, by the selector, service buses with respective switching modules associated with the services according to types of the services further comprises:
sending messages from service boards to the respective switch boards to notify the switch board of the types of the services; and
controlling the selector, by the switch board, to connect the service buses with the respective switching modules associated with the services according to the types of the services.

8. A switch board inserted in a switch board slot of a backplane board, wherein the switch board comprises a plurality of switching modules and a selector, the selector is adapted to connect service buses on the backplane board with respective switching modules associated with services according to types of the services processed by service boards inserted in the backplane board, and the switching modules are adapted to schedule and switch the services.

9. The switch board of claim 8, wherein the selector comprises one-out-of-two switches.

10. The switch board of claim 8, wherein the switch board is adapted to control the selector to connect the service buses with the respective switching modules associated with the services according to the types of the services.
